# EUROPÄISCHE PATENTANMELDUNG

(11) **EP 2 262 082 A1**
(43) Veröffentlichungstag der Anmeldung: **15.12.2010**
(21) Anmeldenummer: 09007794.2
(22) Anmeldetag: 12.06.2009
(51) Int. Cl.: H02K 19/36, H02K 9/12, H02K 5/22, H02K 11/00

(54) **Elektrodynamische Maschine**

(71) Anmelder: SIEMENS AKTIENGESELLSCHAFT, 80333 München (DE)
(72) Erfinder: Lehmann, Christoph, 47506 Neukirchen-Vluyn (DE)

(57) **Zusammenfassung**

Die Erfindung betrifft eine elektrodynamische Maschine, insbesondere einen elektrischen Generator (1), der einen drehbar gelagerten Läufer (4) und einen um den Rotor angeordneten Ständer aufweist, wobei der Ständer eine Ständerwicklung mit drei Wicklungen (5u, 5v, 5w) aufweist, wobei die Wicklungen (5u, 5v, 5w) jeweils ein Ableitungsende (6u, 6v, 6w) und ein Sternpunktende (7u, 7v, 7w) aufweisen, wobei die Sternpunktenden (7u, 7v, 7w) der drei Wicklungen (5u, 5v, 5w) elektrisch miteinander zu einem Sternpunkt (11) verbunden sind, wobei um den Ständer ein Gehäuse (2) angeordnet ist, wobei der Sternpunkt (11) innerhalb des Gehäuses (2) liegt, wodurch auf drei Stromdurchführungen (8), die im Gehäuse (2) üblicherweise angeordnet sind, verzichtet werden kann, was zu Einsparungen und zu Verkürzungen der Fertigungszeit führt.

## Beschreibung

Die Erfindung betrifft eine elektrodynamische Maschine, umfassend einen drehbar gelagerten Läufer und einen um den Rotor angeordneten Ständer, wobei der Ständer eine Ständerwicklung mit drei Wicklungen aufweist, wobei die Wicklungen jeweils ein Ableitungsende und ein Sternpunktende aufweisen, wobei die Sternpunktenden der drei Wicklungen elektrisch miteinander zu einem Sternpunkt verbunden sind, wobei um den Ständer ein Gehäuse angeordnet ist.

In elektrischen Generatoren als Ausführungsform einer elektrodynamischen Maschine wird elektrische Energie erzeugt. Dazu wird ein um eine Rotationsachse drehbar gelagerter Läufer innerhalb eines Ständers drehbar gelagert, wobei der Läufer ein Magnetfeld umfasst, das durch die Rotation des Läufers um die Rotationsachse gedreht wird. Dieses drehende Magnetfeld induziert in der im Ständer angeordneten Wicklung eine elektrische Spannung. Da die Generatoren im Betrieb eine Temperaturerhöhung erfahren, müssen diese geeignet gekühlt werden. Es ist bekannt, Generatoren mit Luft, Sauerstoff oder Wasserstoff zu kühlen. Dazu ist es erforderlich, den Ständer in der Gehäusewand derart anzuordnen, dass ein Austreten von Kühlmedium wirksam vermieden ist.

Allerdings führt dies dazu, dass die im Ständer erzeugte elektrische Energie mittels sogenannter Stromdurchführungen aus dem Gehäuse nach außen geführt werden muss, wobei die Stromdurchführungen gegenüber dem Gehäuse keine Leckage zulassen sollten. Der Aufwand für die Herstellung der Stromdurchführungen und deren Anordnung im Gehäuse ist vergleichsweise aufwändig, da wegen der vorhandenen Hochspannungen und der Hochströme, der erforderlichen Kurzschlussfestigkeit sowie wegen der Gasdruck- und Gasdichtigkeitsanforderungen hohe elektrische, thermische sowie mechanische Anforderungen gestellt werden.

In der Regel werden bei einem elektrischen Generator sechs Stromdurchführungen benötigt. In diesen Generatoren sind drei Wicklungen vorhanden, die auch als Drehstromwicklung bezeichnet wird und eine Phase der dreiphasigen Wechselstromversorgung darstellen. Jede Phase umfasst einen Anfangs- und Endpunkt, wobei jeweils der Anfangs- und Endpunkt über jeweils eine Stromdurchführung aus dem Gehäuse geführt wird. Bei drei Phasen sind somit sechs Stromdurchführungen erforderlich. Es wird hierzu unterschieden zwischen dem Anfangspunkt der Wicklung, der als Phasenklemme bezeichnet wird und dem Endpunkt der Wicklung, der als Sternpunktklemme bezeichnet wird. Es ist bekannt, die Sternpunktklemmen, die über die Stromdurchführungen aus dem Gehäuse geführt werden, zu einem Sternpunkt außerhalb des Generators zusammenzuschalten. Die drei Phasenklemmen werden für den Energietransport an einen Blocktrafo angekoppelt.

Es ist Aufgabe der Erfindung, eine elektrodynamische Maschine, insbesondere einen elektrischen Generator anzugeben, die einfacher ausgebildet und kostengünstiger gefertigt werden kann.

Gelöst wird diese Aufgabe durch eine elektrodynamische Maschine, umfassend einen drehbar gelagerten Läufer und einen um den Rotor angeordneten Ständer, wobei der Ständer eine Ständerwicklung mit drei Wicklungen aufweist, wobei die Wicklungen jeweils ein Ableitungsende und ein Sternpunktende aufweisen, wobei die Sternpunktenden der drei Wicklungen elektrisch miteinander zu einem Sternpunkt verbunden sind, wobei um den Ständer ein Gehäuse angeordnet ist, wobei der Sternpunkt innerhalb des Gehäuses liegt.

Erfindungsgemäß wird somit vorgeschlagen, die Lage des Sternpunktes, der derzeit außerhalb des Gehäuses liegt, in das Innere des Gehäuses zu verlagern. Dies führt dazu, dass auf die Verwendung von drei Stromdurchführungen verzichtet werden kann. Die Zusammenschaltung der Sternpunktklemmen findet daher in geeigneter Form im Generator statt. Dadurch, dass nun lediglich drei Stromdurchführungen statt wie bisher sechs Stromdurchführungen verwendet werden, werden Kosten eingespart sowie Fertigungszeit verkürzt.

Vorteilhafte Weiterbildungen sind in den Unteransprüchen angegeben.

So ist es vorteilhaft, wenn das Gehäuse gasdicht ausgebildet ist. Dadurch wird die Gefahr minimiert, dass das Kühlmedium aus dem Gehäuse austritt. Die Temperaturentwicklung des Generators kann somit besser überwacht werden.

In einer weiteren vorteilhaften Weiterbildung ist ein Strommesssystem am Sternpunktende zum Messen der Stromstärke des in der Wicklung fließenden elektrischen Stromes angeordnet, wobei die gemessene Stromstärke als Ausgangssignal über eine Leitung mit einer im Gehäuse angeordneten Ausgangssignaldurchführung gekoppelt ist. Zur Überwachung der induzierten Spannungen in den einzelnen Wicklungen ist es erforderlich, dass die in der Wicklung fließenden elektrischen Ströme gemessen und überwacht werden. Dazu werden Strommesssysteme verwendet, die innerhalb des Generators im Bereich des Sternpunktendes angeordnet werden und über Leitungen das Signal durch das Gehäuse nach außen leiten. Die Leitungen nach außen durch das Gehäuse sind vergleichsweise kostengünstig und einfach herzustellen, da die Ströme und Spannungen vergleichsweise niedrig sind. Als Strommesssysteme sind beispielsweise Stromwandler möglich.

In einer weiteren vorteilhaften Weiterbildung ist die Ausgangssignaldurchführung in einer Durchführungsplatte angeordnet, die gasdicht am Gehäuse angeordnet ist. Erfindungsgemäß wird somit vorgeschlagen, die Ausgangssignaldurchführung auf einer Platte anzuordnen, die am Gehäuse angebracht sowie wieder entfernt werden kann. Daher sollte die Durchführungsplatte lösbar am Gehäuse angeordnet werden. Im Falle einer Revision oder einer Reparatur kann die Platte leicht entfernt und Reparaturmaßnahmen im Generator durchgeführt werden.

In einer weiteren vorteilhaften Weiterbildung ist für jedes Sternpunktende ein zweites Redundanz-Strommesssystem angeordnet. Sofern ein erstes Strommesssystem ausfallen sollte, wäre dennoch die Ermittlung des fließenden elektrischen Stroms in einer der Wicklungen möglich, da das Redundanz-Strommesssystem ein Ausgangssignal liefert, das über die Durchführungsplatte nach außen geführt wird. Somit ist eine erhöhte Sicherheit gegeben, mit der ermittelt werden kann, ob der Generator fehlerfrei betrieben wird.

Zweckmäßigerweise werden die Strommesssysteme und die Redundanz-Strommesssysteme derart ausgebildet, dass sie nach dem Transformatorprinzip die elektrische Stromstärke ermitteln können. In einer alternativen Ausführungsform können die Strommesssysteme und die Redundanz-Strommesssysteme als Bragg-Sensoren ausgebildet sein.

Ein Ausführungsbeispiel der Erfindung wird anhand der Figuren näher dargestellt. Darin zeigen:
- Figur 1: eine perspektivische Darstellung eines Generators gemäß dem Stand der Technik;
- Figur 2: eine Prinzipskizze der Anschlüsse gemäß dem Stand der Technik;
- Figur 3: eine Prinzipskizze der erfindungsgemäßen An- schlüsse.

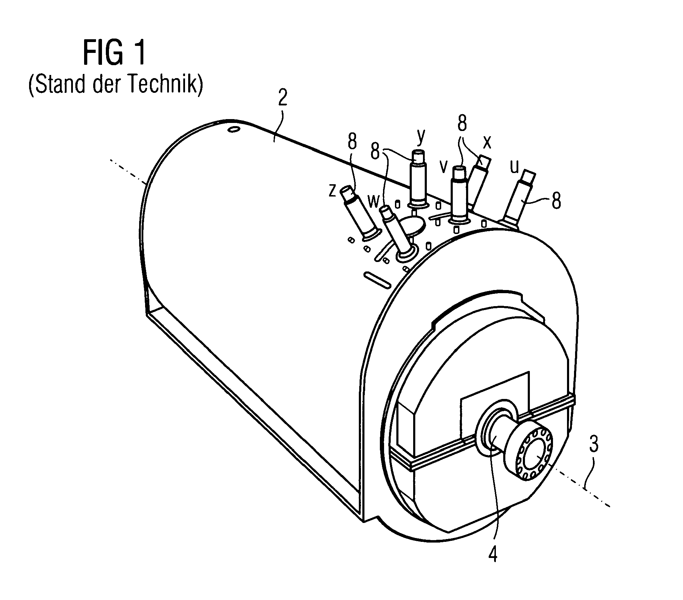

Die Figur 1 zeigt eine perspektivische Ansicht eines Generators 1 als Ausführungsform einer elektrodynamischen Maschine. Solche elektrischen Generatoren liefern elektrische Energie zwischen 10MW und 1500MW. Ein elektrischer Motor ist beispielsweise eine weitere Ausführungsform einer elektrodynamischen Maschine.

Der Generator umfasst ein Gehäuse 2 sowie einen im Gehäuse 2 um eine Rotationsachse 3 drehbar gelagerten Läufer 4. Der Läufer 4 umfasst in der Figur 1 nicht näher dargestellte Wicklungen 5u, 5v, 5w, wobei im Bereich der kommunalen Energieversorgung Generatoren üblicherweise mit drei Wicklungen ausgebildet werden. Die Wicklungen 5u, 5v, 5w umfassen jeweils ein Ableitungsende 6u, 6v, 6w und ein Sternpunktende 7u, 7v, 7w. Die Ableitungsenden 6u, 6v, 6w werden über Stromdurchführungen 8 nach außen geführt. Diese Stromdurchführungen 8 sind hierbei gasdicht und hochspannungsfest am Gehäuse 2 angeordnet. Für die Stromdurchführungen 8 für die Ableitungsenden 6u, 6v, 6w wurden die Buchstaben u, v und w gewählt. Für die Stromdurchführungen 8 bzgl. der Sternpunktenden 7u, 7v, 7w sind die Buchstaben x, y und z gewählt.

Innerhalb des Generators 1, insbesondere innerhab des Gehäuses 2, ist ein nicht näher dargestellter Ständer angeordnet, der die Wicklungen 5u, 5v und 5w umfasst.

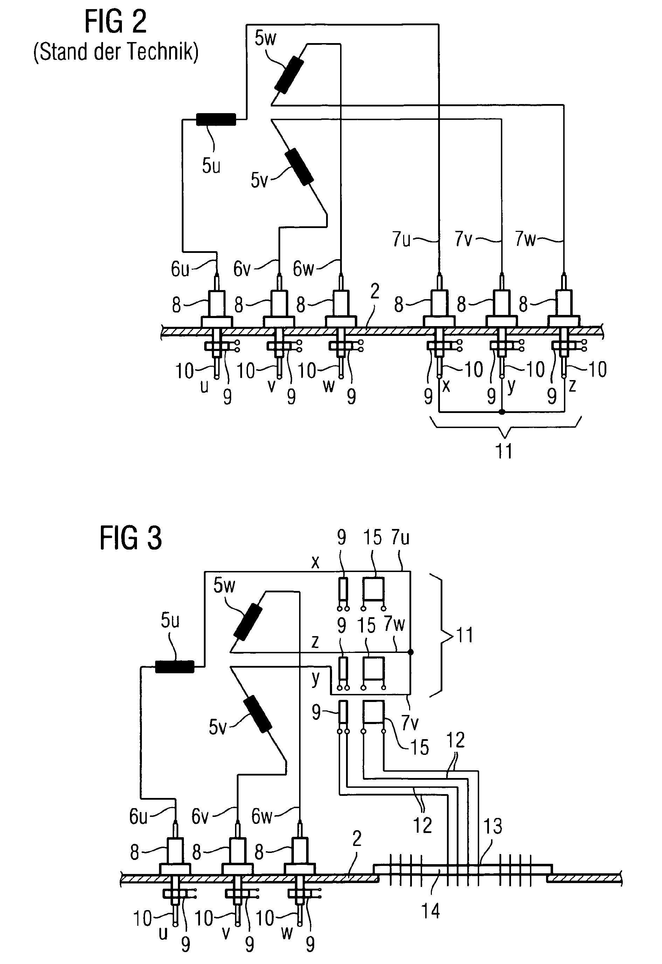

In der Figur 2 ist eine Prinzipskizze gemäß dem Stand der Technik der Anschlüsse im Generator 1 gezeigt. Die Wicklungen 5u, 5v und 5w werden in einer sogenannten Sternanordnung angeschlossen und über die Stromdurchführungen 8 nach außen geführt. Hierbei werden gemäß dem Stand der Technik sechs Stromdurchführungen 8 für eine dreiphasige Ausführungsform des Generators 1 benötigt. Außerhalb des Gehäuses 2 werden Stromwandler 9 angeordnet, um den elektrischen Strom, der in den Leitungen 10 fließt, zu messen.

In der Figur 3 ist eine Prinzipskizze dargestellt, die erfindungsgemäß ausgebildet ist. Der Unterschied zur Ausführungsform gemäß Figur 2 liegt darin, dass der Sternpunkt 11, der in Figur 2 außerhalb des Gehäuses 2 angeordnet ist, nunmehr innerhalb des Gehäuses 2 angeordnet ist. Der Sternpunkt 11 muss hierbei geeignet ausgeführt werden. Die Sternpunktenden 7u, 7v und 7w werden nun nicht mehr zu Stromdurchführungen 8 geführt, sondern werden bereits innerhalb des Gehäuses 2 zu einem Sternpunkt 11 verbunden. Die Verwendung von drei Stromdurchführungen 8 entfällt somit.

Das Gehäuse 2 ist hierbei gasdicht ausgebildet. Das bedeutet, dass ein innerhalb des Gehäuses befindliches Kühlgas nicht aus dem Gehäuse 2 strömen kann. Zur Überwachung der elektrodynamischen Maschine, insbesondere der Wicklungen 5u, 5v und 5 w sind Strommesssysteme 9 vorgesehen, die am Sternpunktende 7u, 7v, 7w angeordnet sind. Diese Strommesssysteme 9 messen die Stromstärke des in der Wicklung 5u, 5v, 5w fließenden elektrischen Stroms. Die gemessene Stromstärke wird hierbei als Ausgangssignal über eine Leitung 12 mit einer im Gehäuse 2 angeordneten Ausgangssignaldurchführung 13 gekoppelt. Als Strommesssysteme 9 werden beispielsweise Stromwandler verwendet.

Die Ausgangssignaldurchführung 13 wird hierbei gasdicht ausgebildet. Des Weiteren sind die Ausgangssignaldurchführungen 13 in einer Durchführungsplatte 14 angeordnet, wobei die Durchführungsplatte 14 gasdicht am Gehäuse 2 angeordnet ist.

Aus Gründen der Sicherheit wird zusätzlich zu einem Strommesssystem 9 ein Redundanz-Strommesssystem 15 angeordnet, das mittels des Transformatorprinzips die elektrische Stromstärke ermittelt. In der in Figur 3 dargestellten Prinzipskizze sind lediglich die Leitungen 12 für das Strommesssystem 9 und das Redundanz-Strommesssystem 15 für die Sternpunktenden 7v angezeigt. Aus Gründen der Übersichtlichkeit sind die Leitungen 12 für die Sternpunktenden 7u und 7w nicht eingezeichnet.

In einer alternativen Ausführungsform können die Strommesssysteme 9 und die Redundanz-Strommesssysteme 15 als Bragg-Sensoren ausgebildet sein.

Die Durchführungsplatte 14 wird lösbar an das Gehäuse 2 angeordnet, wodurch eine Revision bzw. Reparatur innerhalb des Generators 1 möglich ist.

## Patentansprüche

1. Elektrodynamische Maschine,
umfassend einen drehbar gelagerten Läufer (4) und einen um den Rotor angeordneten Ständer,
wobei der Ständer eine Ständerwicklung mit drei Wicklungen (5u, 5v, 5w) aufweist,
wobei die Wicklungen (5u, 5v, 5w) jeweils ein Ableitungsende (6u, 6v, 6w) und ein Sternpunktende (7u, 7v, 7w)aufweisen,
wobei die Sternpunktenden (7u, 7v, 7w) der drei Wicklungen (5u, 5v, 5w) elektrisch miteinander zu einem Sternpunkt (11) verbunden sind,
wobei um den Ständer ein Gehäuse (2) angeordnet ist, **dadurch gekennzeichnet, dass**
der Sternpunkt (11) innerhalb des Gehäuses (2) liegt.

2. Elektrodynamische Maschine nach Anspruch 1,
wobei das Gehäuse (2) gasdicht ausgebildet ist.

3. Elektrodynamische Maschine nach Anspruch 1 oder 2, wobei die Ableitungsenden (6u, 6v, 6w) mit jeweils einer im Gehäuse (2) angeordneten Stromdurchführung (8) verbunden sind.

4. Elektrodynamische Maschine nach einem der vorhergehenden Ansprüche,
wobei ein Strommesssystem (9) am Sternpunktende (7u, 7v, 7w) zum Messen der Stromstärke des in der Wicklung (5u, 5v, 5w) fließenden elektrischen Stroms angeordnet ist,
wobei die gemessene Stromstärke als Ausgangssignal über eine Leitung (12) mit einer im Gehäuse (2) angeordneten Ausgangssignaldurchführung (13) gekoppelt ist.

5. Elektrodynamische Maschine nach Anspruch 4,
wobei die Ausgangssignaldurchführung (13) gasdicht ausgebildet ist.

6. Elektrodynamische Maschine nach Anspruch 5,
wobei die Ausgangssignaldurchführung (13) in einer Durchführungsplatte (14) angeordnet ist, die gasdicht am Gehäuse (2) angeordnet ist.

7. Elektrodynamische Maschine nach einem der Ansprüche 4 bis 7,
wobei für jedes Sternpunktende (7u, 7v, 7w) ein zweites Redundanz-Strommesssystem (15) angeordnet ist.

8. Elektrodynamische Maschine nach einem der Ansprüche 4 bis 8,
wobei die Strommesssysteme (9) und die Redundanz-Strommesssysteme (15) mittels des Transformator-Prinzips die elektrische Stromstärke ermitteln.

9. Elektrodynamische Maschine nach einem der Ansprüche 4 bis 8,
wobei die Strommesssysteme (9) und die Redundanz-Strommesssysteme (15) als Bragg-Sensoren ausgebildet sind.
